(19) Europäisches Patentamt / European Patent Office / Office européen des brevets

(11) **EP 4 715 320 A1**

(12) **EUROPEAN PATENT APPLICATION**
published in accordance with Art. 153(4) EPC

(43) Date of publication:
**25.03.2026 Bulletin 2026/13**

(21) Application number: **24835812.9**

(22) Date of filing: **27.05.2024**

(51) International Patent Classification (IPC):
*G01B 11/06* (2006.01)    *B29C 48/31* (2019.01)
*B29C 48/92* (2019.01)

(52) Cooperative Patent Classification (CPC):
**B29C 48/31; B29C 48/92; G01B 11/06**

(86) International application number:
**PCT/JP2024/019413**

(87) International publication number:
**WO 2025/009291 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.07.2023 JP 2023110735**

(71) Applicant: **JFE Steel Corporation**
**Tokyo, 100-0011 (JP)**

(72) Inventors:
• **INAMORI, Tatsuki**
  **Tokyo 100-0011 (JP)**
• **ODA, Hiromi**
  **Tokyo 100-0011 (JP)**
• **KOBAYASHI, Eihachi**
  **Tokyo 100-0011 (JP)**
• **ICHIMIYA, Toshifumi**
  **Tokyo 100-0011 (JP)**
• **YAMANAKA, Yoichiro**
  **Tokyo 100-0011 (JP)**

(74) Representative: **Grünecker Patent- und Rechtsanwälte**
**PartG mbB**
**Leopoldstraße 4**
**80802 München (DE)**

(54) **METHOD FOR MEASURING FILM THICKNESS DEVIATION, FILM MANUFACTURING METHOD, DEVICE FOR MEASURING FILM THICKNESS DEVIATION, AND FILM MANUFACTURING DEVICE**

(57) Provided are a film thickness deviation measurement technology and a film manufacturing technology which are capable of acquiring information on a film thickness deviation of a film in a non-contact manner by a simple and safe device configuration. A film thickness deviation measurement method includes: setting a film to be measured as an object to be measured; setting a preset background image to be captured by imaging means; acquiring a reference image that is an image obtained by capturing the background image by the imaging means in a state in which the object to be measured is not interposed, or a reference image derived by calculation of an appearance of the background image by the imaging means in a state in which the object to be measured is not interposed; interposing the object to be measured between the background image and the imaging means to acquire a measurement image that is an image obtained by capturing the background image by the imaging means; and calculating an amount of displacement of the background image between two images including the acquired reference image and the acquired measurement image based on the two images to obtain a film thickness deviation of the object to be measured.

EP 4 715 320 A1

# FIG. 2

## Description

Technical Field

The present invention relates to a technology for non-contact measurement of a film thickness deviation of a film through which visible rays are transmitted, and manufacturing a film using the film thickness deviation measurement technology. The present invention relates to a technology suitable particularly when a visible ray transmittance of a target film is equal to or greater than a specific value.
The film through which visible rays are transmitted is made of, for example, a resin or glass. The film of the present disclosure includes a sheet.

Background Art

As a method for measuring a film thickness of a resin film in a non-contact manner in line, the following method is widely used. The method is a method of transmitting a ray such as X-rays or infrared rays through a film and measuring the film thickness according to Lambert-Beer's law based on an attenuation rate of the transmitted light.
Patent Document 1 discloses an optical interferencetype film thickness measurement method of irradiating a film with white parallel light and calculating a film thickness of the film from a spectral intensity of reflected light. In addition, Patent Document 2 discloses an electrostatic film thickness measurement method.
In these film thickness measurement methods, an implementation setup in which measurement is performed while reciprocating one sensor in a direction orthogonal to a transport direction of an object to be measured is frequently used. However, in the method of performing measurement while reciprocating the sensor, the faster a transport speed of the film, the longer an interval in the transport direction of film thickness data at the same width position. Therefore, it is difficult to detect quality or operation abnormality such as a sudden change in a film thickness distribution. Further, there is a problem that it is difficult to separate the film thickness fluctuation in the transport direction and a film thickness fluctuation in a width direction from the film thickness data.
As a related art for such a problem, there is a technology described in Patent Document 3.
Patent Document 3 uses a plurality of X-ray detection elements that are arranged in the width direction and detect a transmitted X-ray dose. Patent Document 3 discloses that the plurality of X-ray detection elements are inclined in the width direction in correspondence with a transport speed and a measurement time to measure the film thickness on a straight line in a direction orthogonal to the transport direction.

Citation List

Patent Literatures

Patent Document 1: JP H7-280523 A
Patent Document 2: JP 2019-2918 A
Patent Document 3: JP 2006-275750 A

Non Patent Literature

Non-Patent Document 1: "Improvement of Density Gradient Visualization Methods Based on the Background Oriented Schlieren Technique" Junichi Akatsuka et al., Transactions of the Japan Society of Mechanical Engineers (B), Vol. 77, No. 784, p. 2391, published on December 25, 2011

Summary of Invention

Technical Problem

According to a film thickness measurement device disclosed in Patent Document 3, the plurality of X-ray detection elements are inclined in the width direction in correspondence with the transport speed and the measurement time. As a result, in Patent Document 3, the thickness on a straight line orthogonal to a travelling direction of the film can be measured. However, in the film thickness measurement device described in Patent Document 3, the plurality of X-ray detection elements are required. Therefore, the film thickness measurement device described in Patent Document 3 has a problem that the maintenance cost increases due to an increase in the equipment cost, the need for calibration between the X-ray detection elements, and the like.

The present invention has been made in view of the above-described circumstances. In addition, an object of the present invention is to provide a film thickness deviation measurement technology capable of acquiring information about a film thickness deviation of a film in a non-contact manner and a film manufacturing technology using the film thickness deviation measurement technology with a simple and safe device configuration.

Solution to Problem

The inventors have conducted intensive studies to solve the problem. As a result of various studies, the inventors have found that a background-oriented Schlieren method used for calculating a density gradient of a fluid is applicable to measurement of a film thickness deviation of a film that is a solid. Further, the inventors have come up with an idea of using the amount of displacement (the amount of movement) of a background between two images of a reference image captured in a state in which an object to be measured is not present and a measurement image captured through the object to be measured. Then, the inventors obtained a finding that the film thickness deviation of the object to be measured can be obtained with a simple and safe device configuration.

The present invention has been made by further studies based on such a finding.

In order to solve the problem, according to an aspect of the present invention, there is provided a film thickness deviation measurement method, including: setting a film to be measured as an object to be measured; setting a preset background image to be captured by imaging means; acquiring a reference image that is an image obtained by capturing the background image by the imaging means in a state in which the object to be measured is not interposed, or a reference image derived by calculation of an appearance of the background image by the imaging means in a state in which the object to be measured is not interposed; acquiring a measurement image that is an image obtained by capturing the background image by the imaging means in a state in which the object to be measured between the background image and the imaging means is interposed; and obtaining a film thickness deviation of the object to be measured, by calculating an amount of displacement of the background image in two images based on the acquired reference image and the acquired measurement image.

The above-described film thickness deviation is obtained, for example, by using the following Equation (1).
[Math. 1]

$$t = \frac{n_{\text{target}}}{n_{\text{air}} - n_{\text{target}}} \frac{1}{d} \int_C \Delta h \cdot v \, dl \qquad \cdots (1)$$

Where,

    t: a film thickness deviation representing a difference between a film thickness of the object to be measured at an origin and a film thickness of the object to be measured at a measurement point,
    $n_{\text{target}}$: a refractive index of the object to be measured,
    $n_{\text{air}}$: a refractive index of atmosphere,
    d: a distance between the background image and the object to be measured,
    $\Delta h$: a two-dimensional vector representing the amount of displacement of the background image of interest on the measurement image from the same background image in the reference image,
    v: a unit tangent vector of a path C, and
    "$\int_C \Delta h \cdot v \, dl$": an operation of linearly integrating an inner product of $\Delta h$ and v over an integral path C from the origin toward the measurement point.

Further, according to another aspect of the present invention, there is provided a method of manufacturing a film, the method forming a film through which a visible ray is transmittable by ejecting a molten resin from a die including a plurality of lip gap adjustment means, the film ejected from the die being transported along a preset pass line, and a background image and imaging means that captures the background image being arranged to interpose the pass line between the background image and the imaging means, the method including: acquiring a measurement image that is an image obtained by capturing the background image by the imaging means via the film; acquiring a reference image that is an image obtained by capturing the background image by the imaging means in a state in which the film is not interposed between the background image and the imaging means, or a reference image derived by calculation of an appearance of the background image by the imaging means in a state in which the film is not interposed; comparing the acquired reference image and the acquired measurement image with each other and computing an amount of displacement of the background image in a film width direction based on the reference image and the measurement image to calculate a film thickness deviation profile in the film width direction; and operating the lip gap adjustment means such that a film thickness deviation at each point is a target value based on the calculated film thickness deviation profile.

Advantageous Effects of Invention

According to the aspect of the present invention, it is possible to acquire information on the film thickness deviation in a non-contact manner with a simple and safe device configuration with a film consisting of a resin, glass, or the like as a target. According to the aspect of the present invention, for example, it is possible to acquire information on the film thickness deviation over the entire length and entire width of the film without contact.

As a result, according to the aspect of the present invention, in a case of manufacturing a film, for example, by quickly reflecting the acquired information on the film thickness deviation in control of the lip gap adjustment means it is possible to manufacture a film with higher accuracy.

Brief Description of Drawings

FIG. 1 is a conceptual diagram of an optical system of a BOS method used for quantitative visualization of a density gradient of a fluid.

FIG. 2 is a schematic configuration diagram of a film thickness deviation measurement device according to an embodiment based on the present invention.

FIG. 3 is a view illustrating a configuration example of a computation unit.

FIG. 4 is a schematic configuration diagram of a film manufacturing device according to the embodiment based on the present invention.

FIG. 5 is a view illustrating the amount of displacement of a background in an MD direction and a TD direction in an example.

FIG. 6 is a view illustrating a film thickness deviation distribution in a film plane in the example.

Description of Embodiments

Hereinafter, an embodiment based on the present invention will be described with reference to the drawings.

It is noted that the embodiment described below is an example of the present invention, and the invention is not limited to the following contents.

(Principle of Present Disclosure)

The inventors have considered applying a background-oriented Schlieren method, which is used for calculating a density gradient of a fluid, to the measurement of a film thickness deviation of a film that is a solid. It is noted that the background-oriented Schlieren method is also referred to as a BOS method. As a result of various studies, it was found that the amount of movement (amount of displacement) of a background between two images including a reference image captured in a state in which an object to be measured is not present and a measurement image captured with the object to be measured interposed can be used. Then, the inventors have obtained a finding that the film thickness deviation of the object to be measured can be obtained with a simple and safe device configuration by calculating the amount of displacement of the background between the two images.

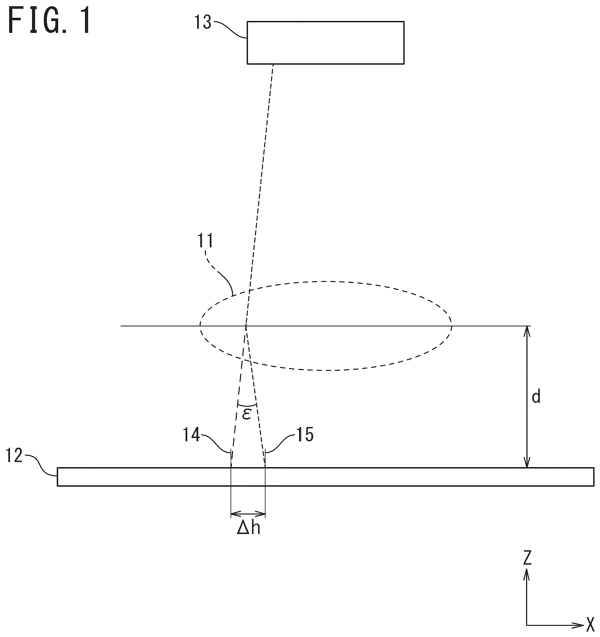

The BOS method is a quantitative visualization method of a density gradient of a fluid. In the BOS method, a density gradient is measured by using a phenomenon in which a background is seen to be shifted due to a difference in refractive index caused by a density gradient when the background is viewed through a fluid (refer to FIG. 1). In the present disclosure, this measurement principle is applied to a film that is a solid, and the film thickness deviation of the film is measured. It is noted that the BOS method has two advantages as compared with a normal Schlieren method. The two advantages are that an optical system for measurement is simple and the density gradient can be quantified.

A conceptual diagram of an optical system of the BOS method is illustrated in FIG. 1. As illustrated in FIG. 1, an optical system of the BOS method includes an object 11 to be measured which is a fluid, a background image 12, and imaging means 13. FIG. 1 shows an apparent optical path 14 and a true optical path 15 due to interposition of the object 11 to be measured from the imaging means 13. In the BOS method, the background image 12 is captured through the object 11 to be measured. In this case, a position of the background image on an image captured by the imaging means 13 is shifted and captured in proportion to a density gradient of the object 11 to be measured.

In this phenomenon, a total deviation angle $\varepsilon$ can be approximated by a ratio of the amount of deviation $\Delta h$ of the background image to a distance d between the object to be measured and the background image in the captured image. That is, the total deviation angle $\varepsilon$ can be expressed as "$\varepsilon = \Delta h/d$".

In addition, the total deviation angle ε is represented by Equation (2). That is, the total deviation angle ε is obtained by integrating a density gradient ∂n/∂x in a direction perpendicular to an optical axis of the refractive index n of the object to be measured over a thickness 2Δz of the object to be measured.
[Math. 2]

$$\varepsilon = \frac{1}{n_0} \int_{d-\Delta z}^{d+\Delta z} \frac{\partial n}{\partial x} \, dz \qquad \cdots (2)$$

In addition, the refractive index n and the density ρ have a relationship of n = ρG + 1 by using a constant G of a Gladstone-Dale rule.
Therefore, the density gradient is expressed by the following Equation (3).
[Math. 3]

$$\int \frac{\partial \rho}{\partial x} dz = \frac{1}{G} \int \frac{\partial n}{\partial x} dz = \frac{n_0 \varepsilon}{G} = \frac{n_0}{G} \frac{\Delta h}{d} \qquad \cdots (3)$$

In the present embodiment, to obtain the gradient of the film thickness t (film thickness deviation) of the film being a solid, an optical system of the BOS method is used.
In the present embodiment, the Gladstone-Dale rule is not used. Instead, in the present embodiment, the refractive index is approximated as having a gradient in an x-direction only at a location that is in contact with air in a film thickness fluctuation portion. As a result, the following Equation (4) can be obtained. Note that the x-direction is any direction selected from a plane direction of the film as the object to be measured. The plane direction of the film is a two-dimensional direction orthogonal to the z-direction.
[Math. 4]

$$\varepsilon = \frac{1}{n_0} \int_{d-\frac{t}{2}}^{d+\frac{t}{2}} \frac{\partial n}{\partial x} \, dz = \frac{1}{n_0} \int_0^{\Delta t} \frac{n_1 - n_0}{\Delta t} \frac{\partial t}{\partial x} \, dz = \frac{n_1 - n_0}{n_0} \frac{\partial t}{\partial x} \qquad \cdots (4)$$

Further, ε = Δh/d. Therefore, from the expression of "ε = Δh/d" and Equation (4), the following Equation (5) is obtained.
[Math. 5]

$$\frac{\partial t}{\partial x} = \frac{n_0}{n_1 - n_0} \frac{\Delta h}{d} \qquad \cdots (5)$$

Then, the film thickness deviation can be measured by integrating Equation (5) in the x-direction. The film thickness deviation is the amount of variation in the film thickness in the x-direction from a set reference position x0.
By expanding this idea, for example, it is also possible to obtain a film thickness deviation in a two-dimensional direction of the x-direction and a y-direction along a surface of the film.
As a specific way of obtaining the film thickness deviation, for example, a method using Equation (1) below is exemplified.
It is noted that in the present specification, the "reference image" refers to an image obtained by capturing the background image by the imaging means without interposing the object to be measured. In addition, the "measurement image" refers to an image obtained by capturing the background image by the imaging means through the object to be measured.
[Math. 6]

$$t = \frac{n_{\text{target}}}{n_{\text{air}} - n_{\text{target}}} \frac{1}{d} \int_C \Delta h \cdot v \, dl \qquad \cdots (1)$$

Where,

t: a film thickness deviation obtained by subtracting a film thickness of the object to be measured at an origin from a film thickness of the object to be measured at a measurement point,

$n_{target}$: a refractive index of the object to be measured,

$n_{air}$: a refractive index of atmosphere,

d: a distance between the background image and the object to be measured,

$\Delta h$: a two-dimensional vector representing the amount of displacement of the background image of interest on the measurement image from the same background image in the reference image,

v: a unit tangent vector of a path C, and

"$\int_C \Delta h \cdot v dl$": an operation of linearly integrating the inner product of $\Delta h$ and v over an integral path C from the origin toward a measurement point.

(Configuration of Film Thickness Deviation Measurement Device)

Next, an example of the film thickness deviation measurement device of the present embodiment will be described.

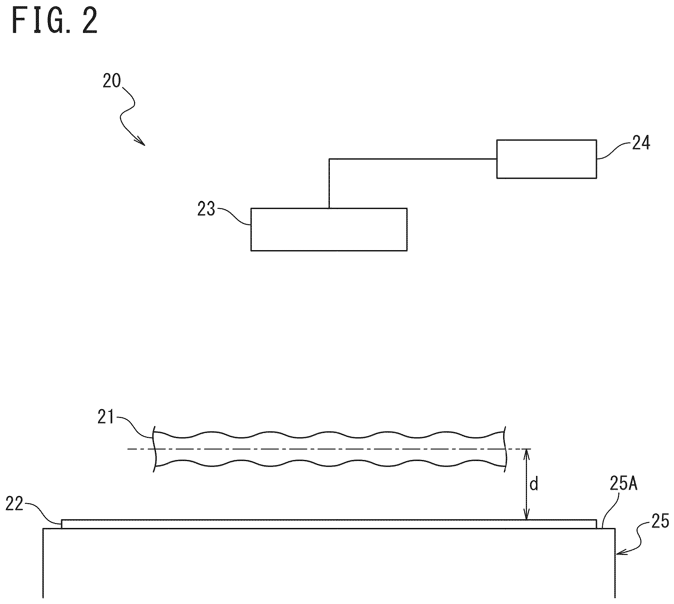

FIG. 2 illustrates a schematic configuration of a film thickness deviation measurement device 20 of the present embodiment.

As illustrated in FIG. 2 as a schematic diagram, the film thickness deviation measurement device 20 of the present embodiment includes a background image 22, imaging means 23 that captures the background image 22, and a computation unit 24.

The object 21 to be measured is a film to be measured.

<Object to be measured>

The object 21 to be measured is disposed in front of the background image in a state in which a film thickness direction is directed to an imaging direction when the measurement image is acquired.

The object to be measured of the present embodiment is a film through which visible rays are transmitted. Therefore, the imaging means 23 can capture the background image 22 through the object 21 to be measured. In principle of capturing the background image 22 through the object 21 to be measured, a visible ray transmittance of the object 21 to be measured is preferably 10% or more, although the visible ray transmittance depends on the film thickness of the object to be measured. In addition, the visible ray transmittance is more preferably 30% or more and still more preferably 70% or more.

In addition, the object 21 to be measured preferably has a haze value of 20% or less regardless of a value of the visible ray transmittance. Further, the haze value is more preferably 15% or less and still more preferably 5% or less.

In the present embodiment, the visible ray transmittance is a total light transmittance in a wavelength range of 400 to 700 nm measured by using a haze meter. In addition, the haze value is a ratio of the total light transmittance to a diffuse transmittance, which is measured by using the same haze meter.

<Background Image>

The background image 22 may be a pattern, a pattern design, or the like that allows the amount of displacement to be detected in a case where a position on an image obtained by capturing the background image by the imaging means is changed depending on presence or absence of interposition of the object 21 to be measured. For example, a configuration in which a spangle pattern is present on a top plate surface 25A of a frame 25 at a position corresponding to the background image 22, and the pattern is captured in detail by the imaging means 23 is employed. In this case, the spangle pattern is used as the background image 22, and it is not necessary to separately provide a special image as the background image.

If there is no appropriate pattern as the background image 22, a random dot image or a stripe image having a periodic luminance distribution is preferable as the background image. The random dot image and the stripe image may be black and white binary or grayscale, or may be, for example, a color image divided into three colors of red, green, and blue. In addition, the background image 22 can be provided by directly drawing random dots on the top plate surface 25A of the frame 25 or by attaching paper on which the background image is printed to the top plate surface 25A.

In addition, a display device that displays a background image may be provided at a top plate surface position of the frame 25, and the background image may be switched depending on passage of time or conditions of the object to be measured. In such a configuration in which the background image is displayed on a display, actual resolution can also be improved by switching the image at a high speed and vibrating the background image. Setting of the background image is not limited to these, and may be installed by various known methods.

<Imaging means>

The imaging means is a device that captures a background image.

As the imaging means 23, a CCD camera, a CMOS camera, or another digital camera can be used. Further, the imaging means 23 may be an area camera or a line camera. In a case where it is desired to measure the film thickness deviation only in a specific one direction, a line camera may be used as the imaging means 23. In this case, an improvement in processing speed or a reduction in equipment cost can be expected.

The imaging means 23 may include a set of a plurality of cameras. In this case, it is possible to reduce an imaging area for the object to be measured, which is assigned to one camera. Accordingly, the resolution can be improved, or a narrow-angle camera can be applied. In this case, it is expected that the reduction in area of the background image 22 will lead to a reduction in scale of the apparatus.

Further, in a case where the background image 22 is black and white binary or grayscale, the camera of the imaging means 23 may be a monochromatic camera. In addition, even when the background image 22 is a color image, for example, a device configuration in which a color filter is arranged between the imaging means 23 and the object 21 to be measured to detect different colors with a plurality of cameras may be employed. In this case, it is preferable to apply a monochromatic camera as the camera of the imaging means 23 from the viewpoint of costeffectiveness and spatial resolution.

<Arrangement relationship and others>

The object to be measured is interposed between the imaging means and the background image when the measurement image is captured.

It is preferable that the object 21 to be measured and the background image 22 are in a parallel arrangement relationship from the viewpoint of analysis computation. However, if parallel arrangement cannot be possible due to arrangement constraint of the devices, appropriate correction may be performed at the time of computation.

In addition, as the object 21 to be measured and the background image 22 are separated from each other, film thickness deviation resolution is improved. Therefore, a facing distance between the object 21 to be measured and the background image 22 is preferably 30 mm or more, more preferably 50 mm or more, and still more preferably 200 mm or more. On the other hand, as the object 21 to be measured and the background image 22 are closer to each other, it is easier to perform focusing in imaging. Therefore, the facing distance between the object 21 to be measured and the background image 22 is preferably 2000 mm or less, more preferably 1000 mm or less, and still more preferably 600 mm or less. The facing distance between the object 21 to be measured and the background image 22 is preferably in a range of 30 to 2000 mm, more preferably in a range of 50 to 1000 mm, and still more preferably in a range of 200 to 600 mm. It is preferable that the distance between the object 21 to be measured and the background image 22 is determined by required film thickness deviation resolution and a lens configuration of the imaging means 23.

It is preferable that an optical axis of the imaging means 23 is orthogonal to the object 21 to be measured and the background image 22 from the viewpoint of the analysis computation or the viewpoint of preventing blurriness. It is preferable that the distance between the imaging means 23 and the object 21 to be measured is determined based on an angle of view and a focal length of the imaging means 23. It is preferable that the distance is set such that the object 21 to be measured and the background image 22 are arranged without blurriness and with a range to be measured of the object 21 to be measured being within an imaging range.

An axis connecting the object 21 to be measured, the background image 22, and the imaging means 23 may be arranged vertically (in a direction orthogonal to the background image) as illustrated in FIG. 2. The axis may be installed horizontally or at any other angle depending on the orientation or the like of the object 21 to be measured, the background image 22, and the like due to an installation environment and other constraints.

Another structure (not illustrated) such as a glass window may be provided in the gap between the object 21 to be measured and the background image 22 or between the object 21 to be measured and the imaging means 23. In this case, it is preferable that the structure has a visible ray transmittance of 10% or more such that the object 21 to be measured and the background image 22 can be recognized through the imaging means 23. Further, the visible ray transmittance is more preferably 30% or more and still more preferably 70% or more. In addition, in a case where the structure has a film thickness deviation, it is preferable to correct the amount of displacement of the background image in the captured image or the computed film thickness deviation of the object 21 to be measured. However, when the distance between the background image 22 and the structure is short and an influence on the computation result of the film thickness deviation of the object 21 to be measured is acceptable, the correction may not be performed. It is more preferable that the structure does not have a film thickness deviation.

<Computation Unit>

The computation unit 24 executes processing of computing the film thickness deviation of the object to be measured based on an image captured by the imaging means. Specifically, the computation unit 24 executes processing of computing the film thickness deviation of the object to be measured by calculating the amount of displacement of the background image between two images including a reference image and a measurement image. The amount of displacement of the background image is determined by, for example, the amount of movement of a region selected from the background image.

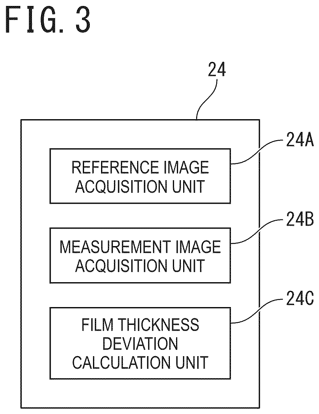

As illustrated in FIG. 3, the computation unit of the present embodiment includes a reference image acquisition unit 24A, a measurement image acquisition unit 24B, and a film thickness deviation calculation unit 24C.

[Reference image acquisition unit]

The reference image acquisition unit 24A performs processing of acquiring the reference image. The reference image is an image that serves as a reference for comparison with the measurement image.

As the processing of acquiring the reference image, a first processing method and a second processing method can be exemplified.

[First processing method]

In the first processing method, an image obtained by capturing the background image 22 by the imaging means 23 is acquired as the reference image. The acquisition of the reference image is performed if it is determined that the object 21 to be measured is not interposed between the imaging means and the background image.

The reference image is an image that serves as a reference for calibration. Therefore, in a case where the film thickness deviation is obtained online, the film thickness deviation may be obtained before the information on the film thickness deviation with respect to the target object to be measured is acquired.

[Second processing method]

In the second processing method, an image derived by calculating the appearance of the background image 22 in a state in which the object 21 to be measured is not interposed by the imaging means 23 is obtained as the reference image.

As a method of calculating the reference image, for example, there is a method of calculating the reference image by performing a projective transformation on printing data of the background image 22 in accordance with a positional relationship between the imaging means 23 and the background image 22. In addition, for example, as a method of calculating the reference image, an image of a marker on a background image located outside a region of the object to be measured in the measurement image is detected. Then, there is a method of calculating the reference image by calculating a projective transformation matrix from a marker position and performing the projective transformation on printing data constituting the background image 22. In such a method of calculating the reference image, the printing data of the background image 22 is provided instead of the image data obtained by capturing the background image 22. Then, the method of calculating the reference image is a method of obtaining the reference image by converting the printing data into an appearance from the imaging means.

In the second processing method, since the reference image is acquired by calculation, it is possible to acquire the reference image for calibration regardless of the presence or absence of the interposition of the object 21 to be measured.

<Measurement image acquisition unit>

The measurement image acquisition unit 24B acquires image data of the background image which is captured by the imaging means as the measurement image in a state in which the target object to be measured is interposed between the background image and the imaging means.

The measurement image acquisition unit 24B may acquire the measurement image whenever an interposition position of the object to be measured is relatively changed. Image processing of combining a plurality of measurement images and converting the measurement images into one measurement image may be executed based on a plurality of measurement images acquired in such a manner.

<Film thickness deviation calculation unit>

The film thickness deviation calculation unit 24C calculates the amount of displacement between respective background images based on the reference image acquired by the reference image acquisition unit 24A and the measurement image acquired by the measurement image acquisition unit 24B. Then, the film thickness deviation of the object to be measured is computed from the amount of displacement. The film thickness deviation calculation unit 24C may execute processing of computing the film thickness deviation once the measurement image acquisition unit 24B acquires the measurement image.

[Calculation of amount of displacement of background]

As a method of calculating the amount of displacement between the background image in the reference image and the background image of the measurement image, various known methods can be employed. Examples of the method include template matching and wavelet analysis.

The template matching is a method used in a particle image velocimetry (PIV) method. In a case where the template matching is used, the reference image is divided into, for example, small inspection windows of 64 pixels square. Then, the cross-correlation coefficient between an image in each of the inspection windows and a region of the same size as the measurement image is repeatedly computed in the entire region or a partial region of the measurement image. Then, a point at which the cross-correlation coefficient is the highest is calculated as coordinates of the inspection window. It is noted that description of the template matching described above is an example. The inspection window may be set on a measurement image side, and an image to be scanned may be used as the reference image. In addition, the inspection windows may overlap each other, and the size of the inspection windows may be a shape such as a rectangle instead of a square. In addition, to reduce the amount of calculation, it is preferable to limit a scanning range by setting a safety factor to a maximum value that can be reasonably considered as a gradient of the film thickness deviation.

A plurality of methods are known as a method of calculating the cross-correlation coefficient. Among these, it is preferable to apply a normalized cross-correlation coefficient, particularly a zero-mean normalized cross-correlation coefficient (ZNCC) from the viewpoint of robustness to brightness fluctuation. However, the normalized cross-correlation coefficient has a large amount of calculation. Therefore, in particular, when a calculation speed is required, it is preferable to apply a sum of absolute differences (SAD) or a sum of squared differences (SSD).

In addition, in the template matching, occurrence of an error vector is known. Each of the known methods can be used to deal with the error vector. For dealing with the error vector, for example, a method of providing a cutoff value for the cross-correlation coefficient, a method of allowing an error vector of a small number of calculation points in view of the fact that the film thickness deviation is an integral value, or a combination thereof is easily applicable.

It is preferable that the wavelet analysis is applied if the film thickness deviation is measured only in a specific one direction. When the amount of displacement is calculated by the wavelet analysis, the background image 22 is preferably a stripe image having a periodic luminance distribution composed of waves having a predetermined spatial frequency. For example, a stripe image consisting of a luminance distribution expressed by a sinusoidal wave, which is employed in the entire region, is applicable as the background image by using, as a period, the amount of displacement calculated by a set value of the safety factor as a maximum value that can be reasonably considered as a gradient of the film thickness deviation. Examples of the method using the wavelet analysis in the BOS method related to a fluid include a method described in Patent Document 1.

Here, continuous wavelet transformation is expressed by the following Equation (6).

[Math. 7]

$$W(b, a) = \frac{1}{\sqrt[2]{|a|}} \sum_{i=1}^{n} x(i) \, \overline{\Psi\left(\frac{i-b}{a}\right)} \quad \cdots (6)$$

Where, the number of elements in one column is represented as n, ith luminance is represented by $x(i)$, and a mother wavelet is represented by $\Psi(i)$. A conjugate complex number of a wavelet function is represented by $\Psi$ with an overline (superscript bar). A reciprocal of a scale parameter a corresponds to a frequency. A shift parameter b corresponds to spatial coordinates.

Various functions have been proposed for the mother wavelet $\Psi(i)$, and examples thereof include a complex wavelet function of Morlet expressed by Equation (7).

[Math. 8]

$$\Psi(t) = \frac{1}{\sqrt{2\pi\sigma^2}} \exp\left(-\frac{t^2}{2\sigma^2}\right) exp(i\omega_0 t) \quad \cdots (7)$$

In the continuous wavelet transformation, a onedimensional luminance distribution along a direction of a stripe is extracted from the reference image and the measurement image. Then, when the continuous wavelet transformation is performed, an intensity with respect to the frequency and the spatial coordinates can be obtained. A phase of a luminance distribution at each spatial coordinate may be calculated from a spatial distribution of the intensity obtained from the wavelet transformation and then the amount of displacement of the background may be calculated from a phase difference between the reference image and the measurement image. However, it is preferable that the amount of displacement of the background is calculated from a phase difference between the reference image and the measurement image by employing a complex wavelet function and using the fact that phase information is directly obtained in addition to the intensity during the continuous wavelet transformation. When the phase difference is multiplied by a period of the luminance distribution, the amount of displacement Δh on the background image 22 is obtained. In addition, in a case where a specific function instead of the sinusoidal wave is employed as a function representing the luminance distribution of the background image 22, it is preferable to use a complex mother wavelet similar to the function. In addition, particularly when a frequency fluctuation of the stripe due to the film thickness deviation is not very large, even when the size of the windows is constant with respect to the frequency, an influence is not large. Therefore, implementation is simplified by using short-time Fourier transformation instead of the continuous wavelet transformation.

[Computation of film thickness deviation]

The film thickness deviation can be computed by using the amount of displacement Δh of the background obtained as described above. However, for example, the following Equation (8) in which an integral path that is first advanced from the origin in a longitudinal direction of the object to be measured that is a film and then advanced in a direction orthogonal to an outward direction is set can be exemplified.

[Math. 9]

$$t(x, y) = \frac{n_{target}}{n_{air} - n_{target}} \frac{1}{d} \left( \sum_x \Delta h_x \, \Delta x + \sum_y \Delta h_y \, \Delta y \right) \quad \cdots (8)$$

Where,

t(x,y): a film thickness deviation obtained by subtracting the film thickness of object to be measured at the origin (0,0) from the film thickness of object to be measured at coordinates (x,y),

$n_{target}$: a refractive index of object to be measured,

$n_{air}$: a refractive index of atmosphere,

d: a distance between the background image and the object to be measured,

Δh: a two-dimensional vector representing the amount of displacement of the background image of interest on the measurement image from the same background image in the reference image,

Δhx: an x-direction component of the amount of displacement of the background, and

Δx: a length in the x-direction per pixel.

In the above-described Equation (8), the integral path is specifically written down. However, more generally, the above-described expression can be represented, for example, in the form of Equation (1).

[Math. 10]

$$t = \frac{n_{\text{target}}}{n_{\text{air}} - n_{\text{target}}} \frac{1}{d} \int_C \Delta h \cdot v \, dl \quad \cdots (1)$$

Where,

t: a film thickness deviation obtained by subtracting a film thickness of the object to be measured at an origin from a film thickness of the object to be measured at a measurement point,

$n_{\text{target}}$: a refractive index of the object to be measured,

$n_{\text{air}}$: a refractive index of atmosphere,

d: a distance between the background image and the object to be measured,

Δh: a two-dimensional vector representing the amount of displacement of the background image of interest on the measurement image from the same background image in the reference image,

v: a unit tangent vector of a path C, and

"$\int_C \Delta h \cdot v dl$": an operation of linearly integrating the inner product of Δh and v over an integral path C from the origin toward a measurement point.

(Operation and others)

The film thickness deviation of the object to be measured which is obtained by the above method can be displayed by a known visualization method.

In a case where the film thickness deviation is obtained only in a specific one direction, it is preferable to display the film thickness deviation with a line graph. In addition, In a case where the film thickness deviation is obtained in an in-plane direction, it is preferable to display the film thickness deviation in the in-plane direction as an overlaid line graph or a heat map.

In this case, the film thickness deviation is, for example, a value obtained by subtracting the film thickness of the object to be measured at the origin from the film thickness of the object to be measured at the measurement point. Therefore, it may be more preferable to display the film thickness in terms of an absolute value by adding the film thickness of the object to be measured at the origin obtained by an appropriate method.

Examples of a method of obtaining the film thickness of the object to be measured at the origin include a method of measuring only one point with a known film thickness meter such as a contact type or a transmission type, and a method of employing a nominal film thickness regardless of an actual film thickness.

(Film manufacturing device (method of manufacturing film))

Next, a film manufacturing device (a method of manufacturing a film) of the present embodiment will be described.

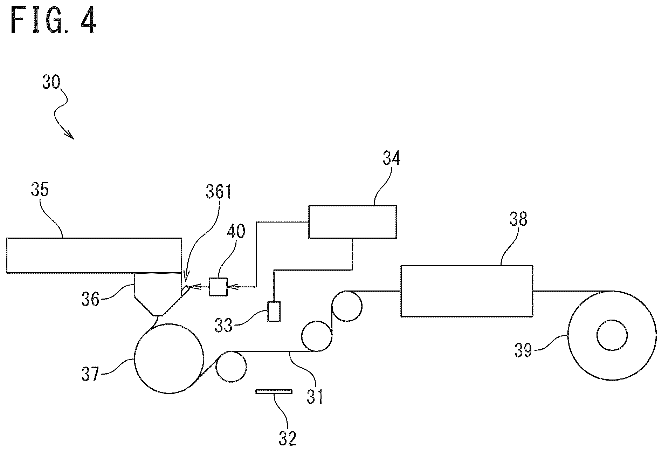

FIG. 4 illustrates a schematic configuration of a film manufacturing device 30 of the present embodiment.

The film manufacturing device 30 of the present embodiment includes an extruder 35, a T-die 36, a cooling roll 37, a stretching machine 38, and a winder 39. The T-die 36 includes a plurality of lip gap adjustment means 361. In addition, the film manufacturing device 30 of the present embodiment includes a film thickness deviation measurement device. The film thickness deviation measurement device includes a background image 32, imaging means 33, and a computation unit 34 having the above-described configurations. Reference numeral 40 denotes a lip gap adjustment unit.

<Extruder>

The extruder 35 includes one or more feeders or hoppers, and melts and kneads a plurality of kinds of resins and fillers as necessary. Any of a single-screw extruder or a twin-screw extruder can be applied to the extruder 35, and the extruder 35 may be a multi-stage type. In addition, a plurality of the extruders 35 may be provided and connected to the T-die 36. To improve the quality of an ejected resin or to stabilize the amount of extrusion, it is preferable to provide a filter, a vent portion, or a gear pump. A known configuration may be employed as the extruder 35.

<T-die>

The T-die 36 squirts a molten resin extruded from the extruder 35 from a gap and continuously forms a resin film having a target film thickness. In a case where the film to be manufactured has a multilayer structure, any of a feed block method and a multi-manifold method is applicable. The feed block method is a method of joining the molten resin in front of the T-die. The multi-manifold method is a method in which a single layer is spread in a T-die and then joined near a lip.

[Lip gap adjustment means 361]

A plurality of lip gap adjustment means 361 of the T-die 36 are provided along a longitudinal direction of the lip of the T-die 36. The lip gap adjustment means 361 adjusts a width of a lip gap to adjust the film thickness of the molten resin (film) according to a command from the lip gap adjustment unit 40 or a manual operation.

The lip gap adjustment unit 40 generates and outputs a command for feedback-controlling the film thickness based on information on the film thickness deviation in the width direction from the computation unit 34.

As a lip gap adjustment mechanism of the lip gap adjustment means 361, a known method may be applied. Examples of a suitable mechanism include a method of changing a push-in amount by rotating a screw-cut bolt, a heat bolt type in which a cartridge heater is built in and thermally expands and contracts, a method of adjusting a bolt or a T-die by applying a hydraulic pressure, and the like.

<Cooling roll 37>

The cooling roll 37 cools the molten resin ejected from the lip gap of the T-die 36 to form a film, thereby solidifying it.

The cooling roll 37 preferably includes a pinning device or a touch roll such as an electrostatic application type, a suction chamber type, and/or an air knife type for the purpose of suppressing a film thickness fluctuation of a film or improving surface properties. In addition, to improve a cooling rate of the molten resin, a part of the cooling roll may be immersed in water or sprayed with water.

<Stretching machine 38>

The stretching machine is a device that stretches the film formed by the cooling roll 37. The stretching processing may be executed as necessary, and the film to be manufactured may not be stretched. The stretching machine 38 constitutes a stretching process.

In a case of stretching with the stretching machine 38, stretching in a transport direction (MD direction: longitudinal direction) and stretching in a width direction (TD direction) can be applied alone or in combination. That is, there are a method of stretching only in the MD direction, a method of stretching only in the TD direction, a method of sequentially stretching in the MD direction and the TD direction, a method of simultaneously stretching in the MD direction and the TD direction, and the like. Further, for example, various stretching methods such as a method of sequentially stretching in the MD direction and the TD direction and then re-stretching in the MD direction or the TD direction can also be applied. Regarding the stretching processing, it is preferable to select and use a stretching method including no stretching in correspondence with a resin type and application of the film.

In addition, for longitudinal stretching in the MD direction, one-stage stretching using a pair of rolls having a speed difference and multi-stage stretching using a plurality of pairs of rolls can be exemplified. All of these can be suitably used. Further, examples of a method of raising a temperature of the film for stretching include a method of using a preheating roll, a method of heating the film in a non-contact manner by using an infrared heater or the like, and the like. All of these can be suitably used. Further, a surface treatment such as a thermal fixing treatment or a corona treatment of relaxing while heating may be performed in the vicinity of the outlet of the stretching machine 38. A measured value of the film thickness deviation which is obtained by the film thickness deviation measurement device can also be used for controlling the stretching machine 38.

<Winder 39>

The winder 39 is a device that winds a manufactured film into a roll shape. The film wound in a roll shape is a product to be shipped.

It is preferable that quality assurance equipment such as a surface inspection device, a pinhole inspection device, and a film thickness meter is installed immediately before the winder 39. In addition, it is preferable to set the product to a desired product width by a slitter or a trimmer. Oscillation winding may be performed in order to prevent a gauge band during winding.

<Film thickness deviation measurement device>

The film thickness deviation measurement device may employ the same configuration as in the film thickness deviation measurement device of the present embodiment described above.

The background image and the imaging means are arranged to face each other with a pass line of the film interposed therebetween. In the example of FIG. 4, the background image 32 and the imaging means 33 are arranged at a pass line position between the cooling roll 37 and the stretching machine 38. Alternatively, the background image 32 and the imaging means 33 may be arranged in front of or downstream of the stretching machine 38. That is, the film thickness deviation measurement unit including the background image 32 and the imaging means 33 can be installed at any position from downstream of the T-die 36 to upstream of the winder 39. In consideration of a case where a refractive index of the film 31 varies due to rapidity of feedback control or an influence of processing by the stretching machine 38, it is preferable that the film thickness deviation measurement unit is installed upstream of the stretching machine 38. In addition, if a distance between the lip of the T-die 36 and the cooling roll 37 is increased by installing the background image 32 and the imaging means 33, there is a concern that unevenness in film thickness in the MD direction and necking in the TD direction may be increased. Therefore, it is preferable that a film thickness deviation measurement unit is installed downstream of the cooling roll 37.

As in the above description, the background image 32 may include an image in which the amount of displacement can be detected when a position on the measurement image varies depending on the presence or absence of the film 31. In particular, a random dot image or a stripe image having a periodic luminance distribution is preferable as the background image 32 from the viewpoint of resolution.

As described above, various digital cameras are applicable to the imaging means 33. In the present example, particularly, by using a line camera, it is expected that a processing speed is improved and the equipment cost is reduced. The imaging means 33 may be a set of a plurality of cameras.

It is noted that by causing the imaging means 33 to also serve as a surface inspection device, it is possible to detect foreign matters, defects, and the like at an early stage. In this case, a surface inspection computation unit (not illustrated) that performs a surface inspection based on an image captured by the imaging means 33 is provided.

It is preferable that the background image 32 and the imaging means 33 are installed in the same structure. In this case, it is possible to suppress a positional deviation between the background image 32 and the imaging means 33 due to vibration or the like during an operation. Further, it is more preferable that a structure installed to calibrate the positional deviation is a mechanism that can capture the reference image by being pulled out offline during the operation.

In addition, it is preferable that the optical axis of the imaging means 33 is set to be orthogonal to the film 31 and the background image 32 from the viewpoint of the analysis computation or the viewpoint of preventing blurriness. An axis connecting the film 31, the background image 32, and the imaging means 33 may be arranged vertically as illustrated in FIG. 4. The axis may be installed horizontally or at any other angle depending on an installation environment and other constraints.

A structure having other visible ray transmitting properties, such as a glass window, may be provided in a gap between the film 31 and the background image 32 or between the film 31 and the imaging means 33. In this case, it is required for the structure to allow the film 31 and the background image 32 to be recognized through the imaging means 33. In addition, when the structure has a film thickness deviation, it is preferable to correct the amount of displacement of the background image 32 or the computed film thickness deviation of the film 31. However, in a case where the distance between the background image 32 and the structure is short and an influence on the computation result of the film thickness deviation of the object 31 to be measured is acceptable, the correction may not be performed. In addition, it is more preferable that the structure does not have a film thickness deviation.

As described above, the computation unit 34 computes the film thickness deviation of the film by calculating the amount of displacement of the background between two images, *i.e.,* the reference image and the measurement image. Then, information on the film thickness deviation in the width direction of the film is supplied to the lip gap adjustment unit 40.

The reference image is a captured image or an image derived by calculation as described above.

In addition, as in the above description, the measurement image is an image obtained by capturing the background image 32 by the imaging means 33 in a state in which the film 31 is interposed. In this example, the object to be measured is transported along the pass line at a predetermined transport speed. The transport speed at the film thickness deviation measurement position may be made relatively slow by using looper equipment or the like.

As for the method of calculating the amount of displacement of the background image between the reference image and the measurement image, various known methods as described above can also be employed. However, in the present example, the information on the film thickness deviation is fed back to control of the lip gap adjustment means. From this viewpoint, it is preferable to perform the computation of the film thickness deviation only in the TD direction. Then, it is particularly preferable to use wavelet analysis or short-time Fourier analysis for calculating the amount of displacement of the background image.

The film thickness deviation is computed by using the amount of displacement of the background image calculated by the above-described method. As in the above-described method, various integral paths can be taken for the computation method. However, in the present example, it is preferable to perform the computation only for the TD direction from the viewpoint of feeding back the film thickness deviation to the control of the lip gap adjustment means. For example, it is more preferable to use the following Equation (9).

[Math. 11]

$$t(x) = \frac{n_{target}}{n_{air} - n_{target}} \frac{1}{d} \sum_x \Delta h_x \, \Delta x \qquad \cdots (9)$$

Where,

t(x): a film thickness deviation obtained by subtracting film thickness of film 31 at origin x = 0 from film thickness of film 31 at TD direction coordinate x,

$n_{target}$: a refractive index of the film 31,

$n_{air}$: a refractive index of atmosphere,

d: a distance between the background image 32 and the film 31,

Δhx: a distance of movement of the background image of interest on the measurement image in the TD direction from the same background image in the reference image, and

Δx: a length in the x-direction per pixel.

The film thickness deviation of the film 31 which is obtained by the above-described method can be displayed by a known visualization way.

In this embodiment, it is preferable to display the information on the computed film thickness deviation only in the TD direction from the viewpoint of feeding back the information on the computed film thickness deviation to the control of the lip gap adjustment means. In addition, to know the change in the film thickness deviation with the passage of time, for example, it is more preferable to display a line graph in which the TD direction coordinate is represented on a horizontal axis and the film thickness deviation is represented on a vertical axis, while changing the color of the line with the passage of time.

In the lip gap adjustment unit 40, an actual film thickness deviation profile of the film 31 which is obtained as described above is compared with an ideal film thickness deviation profile of the film 31 which is input in advance to the computation unit 34. Then, the lip gap adjustment means 361 is controlled to increase the lip gap corresponding to the TD direction coordinate to thicken a portion where the actual film thickness is smaller than the ideal film thickness. In addition, the lip gap adjustment means 361 is controlled to reduce the lip gap corresponding to the TD direction coordinate to reduce a portion where the actual film thickness is larger than the ideal film thickness. That is, the measured film thickness deviation profile is compared with the ideal film thickness deviation profile, and a difference in film thickness at a position corresponding to each lip gap adjustment means 361 in the film width direction is obtained. Then, the feedback control is performed on each lip gap adjustment means 361 such that the difference falls within a predetermined range.

Here, the film undergoes necking in a case of being ejected from a T-die, for example. Therefore, a distance from a center portion of the film 31 in the TD direction to a specific position when the image is captured by the imaging means 33 and a distance from the center portion of the molten resin in the TD direction to the specific position when the film is ejected from the T-die lip are generally different. Therefore, in the lip gap adjustment unit 40, it is preferable to perform association by using various known methods to determine that a command is to be given to which lip gap adjustment means 361 when the difference between the actual film thickness deviation and the ideal film thickness deviation is detected at the specific TD direction coordinate.

In addition, it is known that accuracy is improved by operating a plurality of the lip gap adjustment means 361 at the same time in consideration of an influence coefficient instead of operating only one lip gap adjustment means 361. Therefore, it is preferable to operate the plurality of lip gap adjustment means 361 simultaneously by weighting based on the result of the computation by various known methods.

In the above description, the embodiment of the present invention has been described. However, the present invention is not limited thereto, and various modifications can be made without departing from the scope of the invention. In addition, the film in the above description includes a resin composition that is generally referred to as a sheet because the resin composition is relatively thick.

(Addendum)

The present disclosure may also have the following configurations.

(1) A film thickness deviation measurement method, including:

setting a film to be measured as an object to be measured;
setting a preset background image to be captured by imaging means;
acquiring a reference image that is an image obtained by capturing the background image by the imaging means in a state in which the object to be measured is not interposed, or a reference image derived by calculation of an appearance of the background image by the imaging means in a state in which the object to be measured is not interposed;
acquiring a measurement image that is an image obtained by capturing the background image by the imaging means in a state in which the object to be measured is interposed between the background image and the imaging device; and
obtaining a film thickness deviation of the object to be measured, by calculating an amount of displacement of the background image based on the acquired reference image and the acquired measurement image.

(2) The film thickness deviation is obtained by using the above-described Equation (1).
(3) The integral path C is a path that advances in a first direction which is either a longitudinal direction of the object to be measured or a direction orthogonal to the longitudinal direction of the object to be measured from a preset origin, and then advances in a second direction which is a direction orthogonal to the first direction.
(4) The film thickness deviation measurement method,

in which the object to be measured is transported to pass through between the background image and the imaging means, and
if the film thickness deviation to be measured of the object to be measured is a film thickness deviation in a width direction of the object to be measured, the integral path C is a line segment that extends from the origin in a direction orthogonal to a transport direction.

(5) The background image is a random dot image, and

an amount of displacement Δh of the background image is calculated by template matching using a normalized cross-correlation coefficient.

(6) The background image is a stripe image composed of waves having a predetermined spatial frequency and having a periodic luminance distribution, and

an amount of displacement Δh of the background image is calculated by wavelet analysis.

(7) A visible ray transmittance of the object to be measured is 10% or more.

(8) A method of manufacturing a film, the method forming a film through which a visible ray is transmitted by ejecting a molten resin from a die including a plurality of lip gap adjustment means, the method comprising:

transporting the film ejected from the die along a preset pass line;

providing a background image and imaging means that captures the background image, the background image and the imaging means being arranged to interpose the pass line between them;

acquiring a measurement image that is an image obtained by capturing the background image by the imaging means via the film;

acquiring a reference image that is an image obtained by capturing the background image by the imaging means in a state in which the film is not interposed between the background image and the imaging means, or a reference image derived by calculation of an appearance of the background image by the imaging means in a state in which the film is not interposed;

comparing the acquired reference image and the acquired measurement image with each other and computing an amount of displacement of the background image in a film width direction between the reference image and the measurement image to calculate a film thickness deviation profile in the film width direction; and

operating the lip gap adjustment means such that a film thickness deviation at each point is a target value based on the calculated film thickness deviation profile.

(9) A visible ray transmittance of the film formed by ejecting from the die is 10% or more, and

a stretching step of stretching the film downstream of a position where the measurement image is acquired in the pass line is provided.

(10) A film thickness deviation measurement device of a film through which a visible ray is transmitted,

the film to be measured being set as an object to be measured, the device including:

a background image; imaging means configured to capture the background image;

a reference image acquisition unit configured to acquire a reference image that is an image obtained by capturing the background image by the imaging means in a state in which the object to be measured is not interposed, or a reference image derived by calculation of an appearance of the background image by the imaging means in a state in which the object to be measured is not interposed;

a measurement image acquisition unit configured to acquire a measurement image that is an image obtained by capturing the background image by the imaging means in a state in which the object to be measured is interposed between the background image and the imaging means; and

a film thickness deviation calculation unit configured to calculate an amount of displacement of the background image based on the acquired reference image and the acquired measurement image to obtain a film thickness deviation of the object to be measured.

(11) The background image is a random dot image.

(12) The background image is a stripe image composed of waves having a predetermined spatial frequency and having a periodic luminance distribution.

(13) A visible ray transmittance of the object to be measured is 10% or more.

(14) A film manufacturing device for forming a film through which a visible ray is transmitted by ejecting a molten resin from a die including a plurality of lip gap adjustment means, wherein the film ejected from the die being transported along a preset pass line, and a background image and imaging means that captures the background image being arranged with the pass line interposed between the background image and the imaging means, the device including:

a measurement image acquisition unit configured to acquire a measurement image that is an image obtained by capturing the background image by the imaging means via the film;

a reference image acquisition unit configured to acquire a reference image obtained by capturing the background image by the imaging means in a state in which the film is not interposed between the background image and the imaging means, or a reference image derived by calculation of an appearance of the background image by the imaging means in a state in which the film is not interposed;

film thickness deviation information acquisition unit configured to calculate a film thickness deviation profile of the film in the film width direction by comparing the acquired reference image and the acquired measurement image with each other and computing an amount of displacement of the background image in a film width direction between the compared two images; and

a lip gap adjustment unit configured to operate the lip gap adjustment means such that a film thickness deviation at each point is a target value based on the calculated film thickness deviation profile.

(15) A visible ray transmittance of the film formed by ejecting from the die is 10% or more, and

a stretching machine configured to stretch the film downstream of a position where the image is acquired by the imaging means in the pass line is provided.

Examples

Next, examples based on the present embodiment will be described. However, the following examples are merely for more detailed description of an example of the present invention, and do not limit the scope of the present invention.

(Measurement conditions of present example)

In the present example, a PET film was targeted as a film of the object 21 to be measured. In addition, a photograph of a random dot image was employed as the background image 22. A single lens reflex camera was employed as the imaging means 23. Then, as illustrated in FIG. 2, the imaging means 23 including the single lens reflex camera, the object 21 to be measured consisting of a PET film, and the background image 22 consisting of a random dot image was disposed side by side in a vertical direction. The vertical direction is a direction orthogonal to a plane of the background image 22.

Here, the PET film of the present example is a nonstretched film having an average film thickness of 95 $\mu$m, which is obtained by extrusion forming by the T-die method. The PET film was a film in which a standard deviation of the film thickness in the MD direction is 1.8 $\mu$m and a standard deviation of film thickness in the TD direction is 25 $\mu$m.

The PET film and the random dot image were disposed to be separated by 50 mm, and the PET film and the single lens reflex camera were disposed to be separated by 600 mm.

(Measurement process of film thickness deviation)

First, a background image was captured in a state in which there was no PET film to acquire a reference image. That is, a photograph of the random dot image was captured with a single lens reflex camera without using the PET film.

Next, a background image was captured in a state in which the PET film was interposed to acquire a measurement image. That is, a photograph of a random dot image was captured with the single lens reflex camera through the PET film.

Then, the two acquired images were imported into a personal computer, and computation processing by the computation unit 24 was executed to obtain the film thickness deviation.

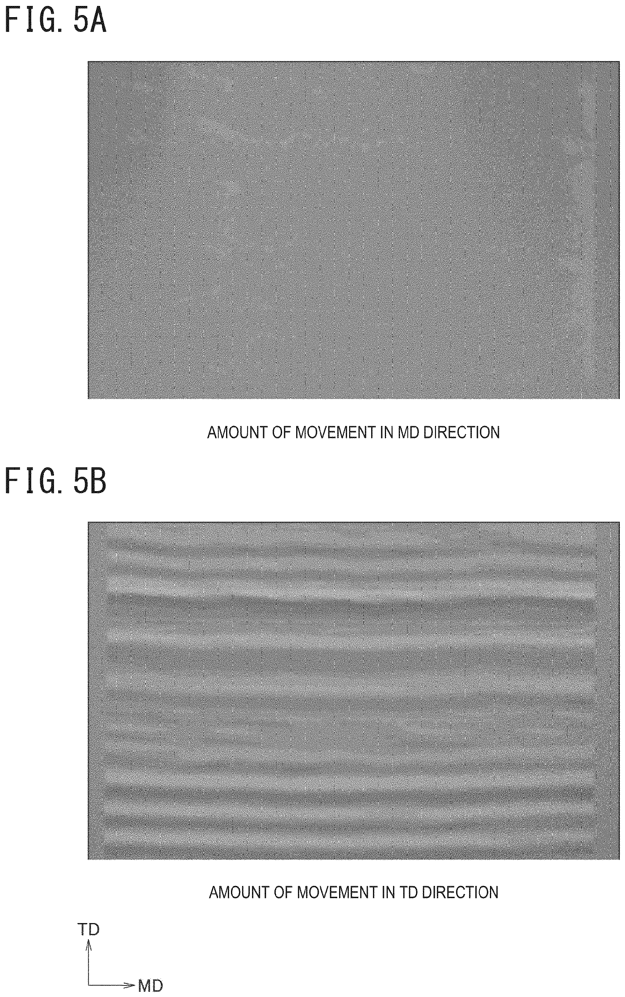

In the present example, first, the amount of displacement of the background image in each of the MD direction and the TD direction between the two images was calculated by pattern matching using ZNCC. FIG. 5 illustrates an amount-of-background-displacement distribution of the amount of displacement calculated. The ZNCC is a template matching-type normalized cross-correlation.

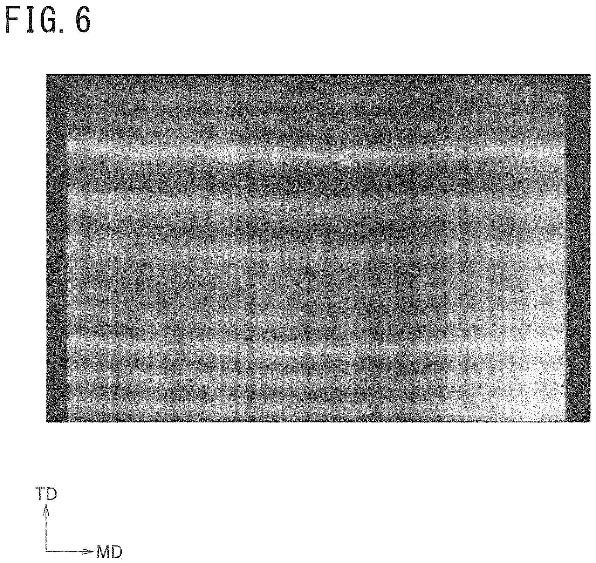

Next, from the amount-of-background-displacement distribution, the film thickness deviation at each point was calculated by using the above-described Equation (8), and the film thickness deviation distribution illustrated in FIG. 6 was obtained.

In FIGS. 5 and 6, a lateral direction is the MD direction, and a longitudinal direction is the TD direction. In addition, in FIGS. 5 and 6, both end portions in the MD direction are regions where the film is not present and the background image is directly visible. Shading indicates the amount of displacement of background or the film thickness deviation.

As can be seen from FIG. 6, the PET film used in the present example has almost no film thickness fluctuation in the MD direction. On the other hand, a periodic film thickness fluctuation is observed in the TD direction.

In addition, it was confirmed that a film thickness fluctuation period in the TD direction matched an interval between heat bolts installed in the T-die, and a width of the T-die lip gap was reflected by the heat bolts.

As described above, it was found that, by using the present invention, it is possible to measure film thickness deviation data (information on the film thickness deviation) in a one-dimensional direction or a two-dimensional direction along a film surface in a simple and safe device configuration and in a non-contact manner.

Here, the entire contents of Japanese Patent Application No. 2023-110735 (filed on July 5, 2023), from which this application claims priority, form a portion of the present disclosure by reference. Although the present invention has been described with reference to the definite number of embodiments, the scope of the present invention is not limited thereto and modifications of the embodiments based on the above disclosure are obvious to those skilled in the art.

Reference Signs List

    20: film thickness deviation measurement device
    21: object to be measured
    22: background image
    23: imaging means
    24: computation unit
    24A: reference image acquisition unit
    24B: measurement image acquisition unit
    24C: film thickness deviation calculation unit
    25: frame
    25A: top plate surface
    30: film manufacturing device
    31: film (object to be measured)
    32: background image
    33: imaging means
    34: computation unit
    35: extruder
    36: T-die
    37: cooling roll
    38: stretching machine
    39: winder
    40: lip gap adjustment unit
    361: lip gap adjustment means

**Claims**

1. A film thickness deviation measurement method, comprising:

    setting a film to be measured as an object to be measured;
    setting a preset background image to be captured by imaging means;
    acquiring a reference image that is an image obtained by capturing the background image by the imaging means in a state in which the object to be measured is not interposed, or a reference image derived by calculation of an appearance of the background image by the imaging means in a state in which the object to be measured is not interposed;
    acquiring a measurement image that is an image obtained by capturing the background image by the imaging means in a state in which the object to be measured is interposed between the background image and the imaging means; and
    obtaining a film thickness deviation of the object to be measured, by calculating an amount of displacement of the background image based on the acquired reference image and the acquired measurement image.

2. The film thickness deviation measurement method according to claim 1,

    wherein the film thickness deviation is obtained by using the following Equation (1),
    [Math. 1]

$$t = \frac{n_{\text{target}}}{n_{\text{air}} - n_{\text{target}}} \frac{1}{d} \int_{C} \Delta h \cdot v \, dl \qquad \cdot \cdot \cdot (1)$$

    where,

18

t: a film thickness deviation representing a difference between a film thickness of the object to be measured at an origin and a film thickness of the object to be measured at a measurement point,

$n_{target}$: a refractive index of the object to be measured,

$n_{air}$: a refractive index of atmosphere,

d: a distance between the background image and the object to be measured,

$\Delta h$: a two-dimensional vector representing the amount of displacement (amount of movement) of the background image of interest on the measurement image from the same background image in the reference image,

v: a unit tangent vector of a path C, and

"$\int_c \Delta h \cdot v dl$": an operation of linearly integrating an inner product of $\Delta h$ and v over an integral path C from the origin toward the measurement point.

3. The film thickness deviation measurement method according to claim 2,
   wherein the integral path C is a path that advances in a first direction which is either a longitudinal direction of the object to be measured or a direction orthogonal to the longitudinal direction of the object to be measured from a preset origin, and then advances in a second direction which is a direction orthogonal to the first direction.

4. The film thickness deviation measurement method according to claim 2,

   wherein the object to be measured is transported to pass through between the background image and the imaging means, and
   if the film thickness deviation to be measured of the object to be measured is a film thickness deviation in a width direction of the object to be measured, the integral path C is a line segment that extends from the origin in a direction orthogonal to a transport direction.

5. The film thickness deviation measurement method according to any one of claims 1 to 4, wherein

   the background image is a random dot image, and
   an amount of displacement $\Delta h$ of the background image is calculated by template matching using a normalized cross-correlation coefficient.

6. The film thickness deviation measurement method according to any one of claims 1, 2, and 4, wherein

   the background image is a stripe image composed of waves having a predetermined spatial frequency and having a periodic luminance distribution, and
   an amount of displacement $\Delta h$ of the background image is calculated by wavelet analysis.

7. The film thickness deviation measurement method according to any one of claims 1 to 6,
   wherein a visible ray transmittance of the object to be measured is 10% or more.

8. A method of manufacturing a film, the method forming a film through which a visible ray is transmitted by ejecting a molten resin from a die including a plurality of lip gap adjustment means, the method comprising:

   transporting the film ejected from the die along a preset pass line;
   providing a background image and imaging means that captures the background image, the background image and the imaging means being arranged to interpose the pass line between them;
   acquiring a measurement image that is an image obtained by capturing the background image by the imaging means via the film;
   acquiring a reference image that is an image obtained by capturing the background image by the imaging means in a state in which the film is not interposed between the background image and the imaging means, or a reference image derived by calculation of an appearance of the background image by the imaging means in a state in which the film is not interposed;
   comparing the acquired reference image and the acquired measurement image with each other and computing an amount of displacement of the background image in a film width direction between the reference image and the measurement image to calculate a film thickness deviation profile in the film width direction; and
   operating the lip gap adjustment means such that a film thickness deviation at each point is a target value based on the calculated film thickness deviation profile.

9. The method of manufacturing a film according to claim 8, wherein

a visible ray transmittance of the film formed by ejected from the die is 10% or more, and
the method further comprises stretching the film downstream of a position where the measurement image is acquired in the pass line.

10. A film thickness deviation measurement device of a film through which a visible ray is transmitted, the film to be measured being set as an object to be measured, the device comprising:

a background image;
imaging means configured to capture the background image;
a reference image acquisition unit configured to acquire a reference image that is an image obtained by capturing the background image by the imaging means in a state in which the object to be measured is not interposed, or a reference image derived by calculation of an appearance of the background image by the imaging means in a state in which the object to be measured is not interposed;
a measurement image acquisition unit configured to acquire a measurement image that is an image obtained by capturing the background image by the imaging means in a state in which the object to be measured is interposed between the background image and the imaging means; and
a film thickness deviation calculation unit configured to calculate an amount of displacement of the background image based on the acquired reference image and the acquired measurement image to obtain a film thickness deviation of the object to be measured.

11. The film thickness deviation measurement device according to claim 10,
wherein the background image is a random dot image.

12. The film thickness deviation measurement device according to claim 10,
wherein the background image is a stripe image composed of waves having a predetermined spatial frequency and having a periodic luminance distribution.

13. The film thickness deviation measurement device according to any one of claims 10 to 12,
wherein a visible ray transmittance of the object to be measured is 10% or more.

14. A film manufacturing device for forming a film through which a visible ray is transmitted by ejecting a molten resin from a die including a plurality of lip gap adjustment means, wherein the film ejected from the die being transported along a preset pass line, and a background image and imaging means that captures the background image being arranged to interpose the pass line between the background image and the imaging means, the device comprising:

a measurement image acquisition unit configured to acquire a measurement image that is an image obtained by capturing the background image by the imaging means via the film;
a reference image acquisition unit configured to acquire a reference image obtained by capturing the background image by the imaging means in a state in which the film is not interposed between the background image and the imaging means, or a reference image derived by calculation of an appearance of the background image by the imaging means in a state in which the film is not interposed;
a film thickness deviation information acquisition unit configured to calculate a film thickness deviation profile of the film in the film width direction by comparing the acquired reference image and the acquired measurement image with each other and computing an amount of displacement of the background image in a film width direction between the compared two images; and
a lip gap adjustment unit configured to operate the lip gap adjustment means such that a film thickness deviation at each point is a target value based on the calculated film thickness deviation profile.

15. The film manufacturing device according to claim 14,

wherein a visible ray transmittance of the film formed by ejecting from the die is 10% or more, and
wherein the device further comprises a stretching machine configured to stretch the film downstream of a position where the image is acquired by the imaging means in the pass line.

FIG. 1

FIG. 2

20

24

23

21

d

25A

22

25

FIG. 3

24

REFERENCE IMAGE
ACQUISITION UNIT — 24A

MEASUREMENT IMAGE
ACQUISITION UNIT — 24B

FILM THICKNESS
DEVIATION
CALCULATION UNIT — 24C

FIG. 4

# FIG. 5A

AMOUNT OF MOVEMENT IN MD DIRECTION

# FIG. 5B

AMOUNT OF MOVEMENT IN TD DIRECTION

TD
↑
└──→ MD

# FIG. 6

TD
↑
└─→MD

## INTERNATIONAL SEARCH REPORT

| | International application No. |
|---|---|
| | **PCT/JP2024/019413** |

**A. CLASSIFICATION OF SUBJECT MATTER**

*G01B 11/06*(2006.01)i; *B29C 48/31*(2019.01)i; *B29C 48/92*(2019.01)i
FI:  G01B11/06 101H; B29C48/31; B29C48/92

According to International Patent Classification (IPC) or to both national classification and IPC

**B. FIELDS SEARCHED**

Minimum documentation searched (classification system followed by classification symbols)

G01B11/06; G01B11/30; G01N21/89; H04N7/18; H04N23/00; B29C48/31; B29C48/92

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-143641 A (MITSUI TOATSU CHEMICALS, INC.) 18 May 1992 (1992-05-18) claims 1, 3, page 3, lower right column, line 8 to line 16, page 4, upper left column, line 7 to line 8, page 4, upper left column, line 17 to upper right column, line 15 | 1, 6-7, 10, 12-13 |
| Y | | 1, 5-15 |
| A | | 2-4 |
| Y | JP 3-42560 A (MITSUI TOATSU CHEMICALS, INC.) 22 February 1991 (1991-02-22) page 2, lower right column, line 13 to line 18, fig. 1 | 1, 5-15 |
| Y | WO 2007/088759 A1 (NATIONAL UNIVERSITY CORPORATION THE UNIVERSITY OFELECTRO-COMMUNICATIONS) 09 August 2007 (2007-08-09) paragraph [0002] | 5, 11 |
| Y | JP 2000-211016 A (TEIJIN LIMITED) 02 August 2000 (2000-08-02) paragraphs [0015], [0018], fig. 9 | 8-9, 14-15 |

☑ Further documents are listed in the continuation of Box C. ☑ See patent family annex.

| * Special categories of cited documents: |
|---|
| "A" document defining the general state of the art which is not considered to be of particular relevance |
| "D" document cited by the applicant in the international application |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2024** | **13 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
| --- |
| **PCT/JP2024/019413** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2013-95052 A (TORAY INDUSTRIES, INC.) 20 May 2013 (2013-05-20)<br>paragraphs [0023]-[0028] | 8-9, 14-15 |

Form PCT/ISA/210 (second sheet) (July 2022)

**INTERNATIONAL SEARCH REPORT**
Information on patent family members

International application No.

**PCT/JP2024/019413**

| Patent document cited in search report | | | Publication date (day/month/year) | Patent family member(s) | Publication date (day/month/year) |
|---|---|---|---|---|---|
| JP | 4-143641 | A | 18 May 1992 | (Family: none) | |
| JP | 3-42560 | A | 22 February 1991 | (Family: none) | |
| WO | 2007/088759 | A1 | 09 August 2007 | US 2009/0037137 A1 paragraph [0002] | |
| JP | 2000-211016 | A | 02 August 2000 | (Family: none) | |
| JP | 2013-95052 | A | 20 May 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H7280523 A
- JP 2019002918 A
- JP 2006275750 A
- JP 2023110735 A

### Non-patent literature cited in the description

- **JUNICHI AKATSUKA et al.** Improvement of Density Gradient Visualization Methods Based on the Background Oriented Schlieren Technique. *Transactions of the Japan Society of Mechanical Engineers (B)*, 25 December 2011, vol. 77 (784), 2391